# EUROPÄISCHE PATENTSCHRIFT

(11) **EP 3 216 584 B1**
(45) Veröffentlichungstag und Bekanntmachung des Hinweises auf die Patenterteilung: **23.09.2020**
(21) Anmeldenummer: 17168200.8
(22) Anmeldetag: 17.12.2013
(51) Int. Cl.: B29C 49/42, B65C 9/00, B29C 49/68, B29C 49/64, B65G 54/02, B29C 49/80

(54) **VERFAHREN ZUM BETREIBEN EINER BEHÄLTERBEHANDLUNGSANLAGE UND BEHÄLTERBEHANDLUNGSANLAGE**
METHOD FOR OPERATING A CONTAINER PROCESSING SYSTEM AND CONTAINER PROCESSING SYSTEM
PROCÉDÉ DE FONCTIONNEMENT D'UNE INSTALLATION DE MANIPULATION DE RÉCIPIENT ET INSTALLATION DE MANIPULATION DE RÉCIPIENT

(30) Priorität: 22.01.2013 DE 102013100627
(43) Veröffentlichungstag der Anmeldung: 13.09.2017
(62) Teilanmeldung aus: 13805915.9
(73) Patentinhaber: Krones Aktiengesellschaft, 93073 Neutraubling (DE)
(72) Erfinder: WINZINGER, Frank, 93073 Neutraubling (DE)
(74) Vertreter: Benninger, Johannes

(56) Entgegenhaltungen:
- EP-A1- 2 423 111
- WO-A1-2011/131704
- DE-A1- 4 133 114
- DE-U1-202008 008 755
- US-A1- 2011 198 198
- US-A1- 2011 236 517

## Beschreibung

Die vorliegende Erfindung betrifft ein Verfahren zum Betreiben einer Behälterbehandlungsanlage und eine Behälterbehandlungsanlage gemäß den Merkmalen der Oberbegriffe der Ansprüche 1 und 11.

In vielen Industriebereichen, insbesondere jedoch in der Getränkeindustrie, d.h. beim Herstellen von Getränkebehältern, Befüllen dieser Behälter, Bedrucken und / oder Etikettieren dieser Behälter und auch beim anschließenden Verpacken müssen die entsprechenden Behälterbehandlungsmaschinen jeweils produktspezifisch umgerüstet werden. Der Umrüstprozess erfolgt häufig manuell, halbautomatisch oder komplett automatisiert. Insbesondere müssen bestimmte Formatteile ausgetauscht werden, d.h. alte Formatteile müssen abmontiert und entfernt werden und neue Formatteile müssen in oder an der Maschine befestigt werden. Um große Stillstandzeiten zu vermeiden, müssen die Umrüstprozesse zeitoptimiert stattfinden.

DE 102009039700 A1 beschreibt eine Magazinvorrichtung zur Aufbewahrung von Blasstationen. Die vom Blasrad abmontierten Blasstationen werden über die Transportsterne der Blasmaschine abtransportiert und dem Magazin zugeführt.

DE 102008004773 A1 beschreibt ein Verfahren zum Umrüsten einer Blasmaschine, bei dem große Stillstandzeiten vermieden werden. Insbesondere sind mindestens zwei Arbeitsbereiche vorgesehen, wobei an jedem Arbeitsbereich unterschiedliche Prozesse durchgeführt werden. Der automatische Wechsel der Blasstationen erfolgt über Pneumatikzylindereinheiten, die dem Blasrad seitlich zugeordnet sind.

DE 102008049905 A1 beschreibt ein Schnellwechselsystem für Reckstangen. Die Reckstangen sind mehrteilig aufgebaut, wobei mindestens zwei der Stangenelemente werkzeugfrei lösbar bzw. miteinander verbindbar sind. Die Stangenelemente sind über einen Eingriffskörper verbunden, der als Verdrehsicherung dient.

DE 102008050697 A1 offenbart eine schnell wechselbare Blasdüse. Insbesondere weist die Blasdüse einen Verbindungsmechanismus auf, über den die Blasdüse werkzeugfrei vom Träger abnehmbar ist. Dadurch kann ein schneller manueller Wechsel durchgeführt werden.

Die Offenlegungsschrift WO 2011/131704 A1 offenbart ein Verfahren und eine Vorrichtung nach den Oberbegriffen der Ansprüche 1 und 11.

Das Dokument DE 4133114 A1 offenbart ein Fördersystem für Stückguter mit einem asynchronen Linearmotor als Antrieb. Hierbei ist ein die Förderbahn bildender Langstatormotor mit stationären elektrischen/elektronischen Komponenten und bürstenlosen Läufern zur Förderung der Stückgüter vorgesehen.

Die Offenlegungsschrift EP 2423111 A1 beschreibt eine Fördervorrichtung mit mindestens einer auf einer Bahn bewegbaren Transporteinheit, die zumindest mittelbar mit einer Antriebseinheit verbunden ist. Eine Aufnahmeeinrichtung ist zum Ausrichten des Behältnisses gegenüber der Bahn zumindest mittelbar und zumindest zeitweise in Abhängigkeit von mindestens einer beim Bewegen der Transporteinheit auf die Aufnahmeeinrichtung und/oder das Behältnis einwirkenden Kraft ausgerichtet.

Die Gebrauchsmusterschrift DE 202008008755 U1 betrifft ein Transportelement für einen Vorformling. Mehrere Transportelemente durchlaufen eine Einrichtung zum Erwärmen der Vorformlinge. Dabei weist jedes der Transportelemente ein Kopfteil auf. Am Kopfteil ist ein lösbares Halteelement befestigt, welches den Vorformling trägt.

Das Dokument US 2011/198198 offenbart eine Übergabevorrichtung mit einem Rahmen und mindestens einem Greifer. Der Greifer besteht aus einem Magnetelement, das bei Einwirkung eines Magnetfeldes, das größer als eine Effizienzschwelle ist, eine Kraft auf mindestens eine bewegliche Backe ausüben kann. Eine Greiferkörperführungseinrichtung ist so ausgeführt, dass das magnetische Element des Greifers in Translation entlang einer Bewegungsbahn angetrieben wird, die durch den Arbeitsbereich des Greifers verläuft, der durch die Steuervorrichtung definiert ist.

Das Dokument US 2011/0236517 A1 beschreibt ein Verfahren zum Herstellen von Kunststoffbehältern mittels einer Blasmaschine, wobei die Blasmaschine derart betrieben wird, dass wenigstens zwei voneinander unterschiedliche Kunststoffbehälter innerhalb eines Produktionsdurchlaufs aus der Blasmaschine ausgebracht werden.

Aufgabe der Erfindung ist, ein Verfahren zum Betreiben einer Behälterbehandlungsanlage und eine Behälterbehandlungsanlage bereitzustellen, wobei für den halb- oder komplett automatisierten Formatwechsel möglichst wenige Zusatzeinrichtungen benötigt werden.

Die obige Aufgabe wird durch ein Verfahren zum Betreiben einer Behälterbehandlungsanlage und eine Behälterbehandlungsanlage gelöst, die die Merkmale in den Patentansprüchen 1 und 11 umfassen und damit die vorliegende Erfindung entspricht. Weitere vorteilhafte Ausgestaltungen werden durch die Unteransprüche beschrieben.

Die vorliegende Offenbarung betrifft ein Verfahren zum Betreiben einer Behälterbehandlungsanlage und eine solche Behälterbehandlungsanlage. Die Behälterbehandlungsanlage umfasst mindestens eine Behälterbehandlungsvorrichtung mit mindestens einem ersten Funktionselement. Das erste Funktionselement weist einen ersten Antrieb für mindestens eine erste Arbeitsfunktion des Funktionselementes im laufenden Behälterbehandlungsbetrieb auf. Weiterhin umfasst die Behälterbehandlungsanlage mindestens ein zweites Funktionselement. Erfindungsgemäß umfasst das erste Funktionselement mindestens ein erstes Betätigungselement. In einem ersten laufenden Behälterbehandlungsbetrieb ist das erste Funktionselement so eingestellt, dass das erste Betätigungselement keinen Kontakt mit dem zweiten Funktionselement ausgebildet hat und / oder keine Funktion auf das zweite Funktionselement ausübt. Für einen zweiten laufenden Behälterbehandlungsbetrieb oder für einen dritten Wechselbetrieb wird das mindestens eine erste Funktionselement durch den ersten Antrieb so verfahren und / oder neu positioniert oder eingestellt, dass das erste Betätigungselement durch Kontakt mit dem mindestens einen zweiten Funktionselement der Behälterbehandlungsanlage eine Funktionalität dieses zweiten Funktionselements auslöst bzw. aktiviert. Insbesondere ist das mindestens eine erste Funktionselement für den Wechselbetrieb in eine Position verfahrbar, insbesondere in eine Drehposition oder eine Linearposition, die vom ersten Funktionselement im normalen Behälterbehandlungsbetrieb nicht eingenommen wird.

Vorzugsweise umfasst die Behälterbehandlungsanlage eine Steuerungseinheit, die die Positionierung des mindestens einen ersten Antriebs ansteuert und kontrolliert. Insbesondere reguliert die Steuerungseinheit die Verstellung des Antriebs des mindestens einen ersten Funktionselements von einem Arbeitsmodus des ersten laufenden Behälterbehandlungsbetrieb zu einem zweiten laufenden Behälterbehandlungsbetrieb oder zu einem Wechselmodus des dritten Wechselbetriebs. Bei den für die ersten Funktionselemente vorgesehenen Antrieben handelt es sich insbesondere um Servomotoren.

Gemäß einer Ausführungsform der Erfindung ist das mindestens eine zweite Funktionselement ein auswechselbares Formatteil, das über einen Befestigungs- und Lösemechanismus an einer Behälterbehandlungsvorrichtung angeordnet ist. Alternativ kann es sich bei dem zweiten Funktionselement auch um einen mit einem auswechselbaren Formatteil verbundenen Mechanismus handeln, insbesondere um einen Befestigungsmechanismus für das Formatteil. Im ersten laufenden Behälterbehandlungsbetrieb befindet sich das Formatteil nicht in Kontakt mit dem Betätigungselements des ersten Funktionselementes. Nach der Verstellung bzw. NeuPositionierung des ersten Funktionselementes in den Wechselmodus für den dritten Wechselbetrieb kontaktiert und aktiviert das Betätigungselement des ersten Funktionselementes den Lösemechanismus des Formatteils, wodurch die Befestigung des Formatteils an der Behälterbehandlungsvorrichtung gelöst wird.

Allgemein kann es sich also beim zweiten Funktionselement um ein Element handeln, welches im normalen Arbeitsbetrieb der Behälterbehandlungsvorrichtung im Einsatz ist. Einsatzmöglichkeiten sind beispielsweise die Aufnahme von Behältern zu deren Transport oder zu deren Abstützung oder zur Zuführung zu Behandlungen (Füllen, Verschließen, Formen, Sterilisieren...) von den Behältern.

Das zweite Funktionselement ist insbesondere an derselben Behälterbehandlungsvorrichtung angeordnet wie das erste Funktionselement. Alternativ kann das zweite Funktionselement aber auch ein Bestandteil einer anderen, insbesondere einer benachbarten Behälterbehandlungsvorrichtung der Behälterbehandlungsanlage sein.

Die vorliegende Offenbarung betrifft insbesondere ein Verfahren zum Betreiben einer Behälterbehandlungsanlage mit mindestens einem Transportsystem umfassend ein Schienensystem und eine Mehrzahl von magnetisch am Schienensystem beweglich angeordneten Transporteinheiten, wobei das Transportsystem mindestens ein erstes Funktionselement mit einem ersten Antrieb für mindestens eine erste Arbeitsfunktion des ersten Funktionselementes im laufenden Behälterbehandlungsbetrieb aufweist und wobei das Transportsystem mindestens ein zweites Funktionselement umfasst. Das erste Funktionselement weist mindestens ein erstes Betätigungselement auf und ist und in einem ersten laufenden Behälterbehandlungsbetrieb so eingestellt, dass das erste Betätigungselement keine Funktion auf das zweite Funktionselement ausübt. Das mindestens eine erste Funktionselement kann für einen zweiten laufenden Behälterbehandlungsbetrieb oder für einen dritten Wechselbetrieb durch den ersten Antrieb so verfahren und / oder neu positioniert oder eingestellt werden, dass das erste Betätigungselement durch Kontakt mit dem mindestens einen zweiten Funktionselement eine Funktionalität des zweiten Funktionselements auslöst oder aktiviert.

Gemäß einer weiteren Ausführungsform der Erfindung umfasst die Behälterbehandlungsvorrichtung mindestens ein zweites Funktionselement, das identisch oder zumindest weitgehend identisch mit dem ersten Funktionselement ist und ebenfalls ein Betätigungselement und einen Antrieb umfasst. In einem zweiten laufenden Behälterbehandlungsbetrieb wird das erste Funktionselement über den ersten Antrieb so verfahren, dass das erste Betätigungselement auf das zweite Funktionselement wirkt und eine Verstellung oder eine weitere Funktion des zweiten Funktionselementes auslöst. Insbesondere wird eine Mehrzahl identischer Funktionselemente in Reihe nacheinander angeordnet werden. Hierbei kann jeweils der Antrieb mindestens eines der Funktionselemente gezielt angesteuert werden. Dieses aktuell angesteuerte Funktionselement fungiert als erstes Funktionselement und aktiviert gezielt die Funktionalität mindesten eines benachbarten Funktionselementes. Das benachbarte, aktivierte Funktionselement bildet somit das zweite Funktionselement der Behälterbehandlungsanlage.

Gemäß einer weiteren Ausführungsform ist die Behälterbehandlungsvorrichtung ein Transportsystem mit einer Mehrzahl von Transporteinheiten. Jede der Transporteinheiten weist einen eigenen Antrieb, einen Aufnahmebereich für ein Aktivierungselement und ein Aktivierungselement auf. Jede Transporteinheit kann eine erste Arbeitsposition einnehmen, in der es als erstes Funktionselement einsetzbar ist und eine zweite Arbeitsposition einnehmen kann, in der es als zweites Funktionselement fungiert. Jede als erstes Funktionselement fungierende Transporteinheit kann in einem ersten laufenden Behälterbehandlungsbetrieb als einfache Transporteinheit für Flaschen, Vorformlinge oder andere Behälter dienen. In einem zweiten laufenden Behälterbehandlungsbetrieb kann es durch Eingriff seines Aktivierungselementes in den Aufnahmebereich einer benachbarten Transporteinheit eine Funktion dieser benachbarten Transporteinheit auslösen, die in dieser Konstellation das zweite Funktionselement bildet.

Vorzugsweise handelt es sich bei dem Transportsystem um ein System mit magnetisch beweglichen Transporteinheiten, die über ein Schienensystem bewegt werden. Jede Transporteinheit weist einen Lösemechanismus für das auf ihm angeordnete Greif- oder Halteelement auf, der von dem Betätigungselement einer nachlaufenden Transporteinheit betätigt werden kann. Gemäß einer Ausführungsform wird das Greif- oder Halteelement von der Transporteinheit gelöst und kann einfach abgenommen oder in eine Sammelvorrichtung abgeworfen werden. Alternativ kann das Betätigungselement der nachlaufenden Transporteinheit auch ein Ablösen des am Greif- oder Halteelement angeordneten transportierten Artikels bewirken, der anschließend einfach abgenommen oder in eine Sammelvorrichtung abgeworfen werden kann. Gemäß einer weiteren Ausführungsform kann vorgesehen sein, dass defekte Transporteinheiten erkannt werden, diese über ein Betätigungselement an die nachlaufenden Transporteinheit gekoppelt werden und von dieser aus dem System heraustransportiert werden.

Weiterhin kann jede Transporteinheit einen Hebel o.ä. zum Heben und Senken der transportierten Artikel umfassen. Soll der Artikel ausgeworfen werden, fährt die nachlaufende Transporteinheit nah an die vorauseilende Transporteinheit auf, so dass das Betätigungselement der nachlaufenden Transporteinheit den Hebel der vorauseilenden Transporteinheit betätigt. Der Artikel wird so angehoben, dass er über eine Abstreifschiene abgeworfen wird. Weitere Funktionen innerhalb einzelner Behälterbehandlungsvorrichtungen sind möglich. Beispielsweise kann vorgesehen sein, dass das Betätigungselement der nachlaufenden Transporteinheit eine vertikale Bewegung des Greif- oder Halteelements der vorauseilenden Transporteinheit bewirkt oder eine Rotationsbewegung des Greif- oder Halteelements der vorauseilenden Transporteinheit bewirkt. Insbesondere kann dies im Zusammenhang mit preferential heating eingesetzt werden. Am Greif- oder Halteelement ist beispielsweise ein Zahnrad angeordnet. Dieses kann, wenn es durch die Aktivierung eines Betätigungselementes angehoben wird, eine entlang der Heizvorrichtung angeordnete Zahnstange kontaktieren , so dass über einen Linearantrieb indirekt der schrittweise benötigte Drehantrieb zum Umfangsheizen erzeugt werden kann.

Gemäß einer weiteren Ausführungsform enthält jede Transporteinheit einen Hebel o.a. zum Steuern des Greif- oder Halteelements der Transporteinheit für die transportierten Artikel. Wenn es beim Transport zu einer Kollision und somit zu einem Defekt der Artikel kommt oder wenn durch eine Inspektionseinrichtung ein Defekt des jeweils transportierten Artikels erkannt wird, wird der Hebel durch das Betätigungselement einer nachlaufenden Transporteinheit betätigt und der Artikel von der Transporteinheit gelöst. Vorzugsweise erfolgt dies an definierten Positionen innerhalb der Behälterbehandlungsanlage, an denen entsprechende Sammelvorrichtungen, insbesondere stationäre, bereitstehen.

Beispielhaft wurde immer die nachlaufende Transporteinheit mit Betätigung als erstes Funktionselement beschrieben. Alternativ kann das Betätigungselement jeweils derart an der Transporteinheit angeordnet sein, dass jeweils die vorauseilende Transporteinheit als erstes Funktionselement wirkt, die eine Funktionalität bei der nachlaufenden Transporteinheit auslöst.

Weiterhin kann vorgesehen sein, dass das erste und das zweite Funktionselement zwar jeweils dieselbe Funktionalität in der Behälterbehandlungsvorrichtung ausüben, jedoch unterschiedlich aufgebaut sind. Insbesondere umfasst das zweite Funktionselement keinen eigenen Antrieb, sondern wird über ein Betätigungselement des ersten Funktionselements angetrieben.

Die Erfindung schlägt insbesondere vor, mindestens einem angetriebenen Funktionselement ein Betätigungselement zuzuordnen, welches durch die gegebenen Bewegungsabläufe im laufenden Produktionsbetrieb nicht zum Einsatz kommt. Das Funktionselement kann aber in einem zweiten Betriebsmodus oder in einem dritten Wechselmodus durch seinen Antrieb in eine zweite Position bewegt werden. In dieser Position wird durch das Betätigungselement am Formatteil ein Mechanismus ausgelöst, durch welchen die Formatteile zur erleichterten Entnahme freigegeben werden. Alternativ kann auch vorgesehen sein, dass durch das Betätigungselement Formatteile verriegelt und somit befestigt werden. Insbesondere übt somit mindestens ein Antrieb eine Doppelfunktion aus, indem er im Behälterbehandlungsbetrieb die Normalfunktion eines ersten Funktionselementes bewirkt. Durch eine Verstellung des ersten Funktionselementes über den Antrieb, kann dieses in einem zweiten laufenden Behälterbehandlungsbetrieb oder in einem dritten Wechselbetrieb eine Funktion auf das zweite Funktionselement bzw. Formatteil ausüben.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

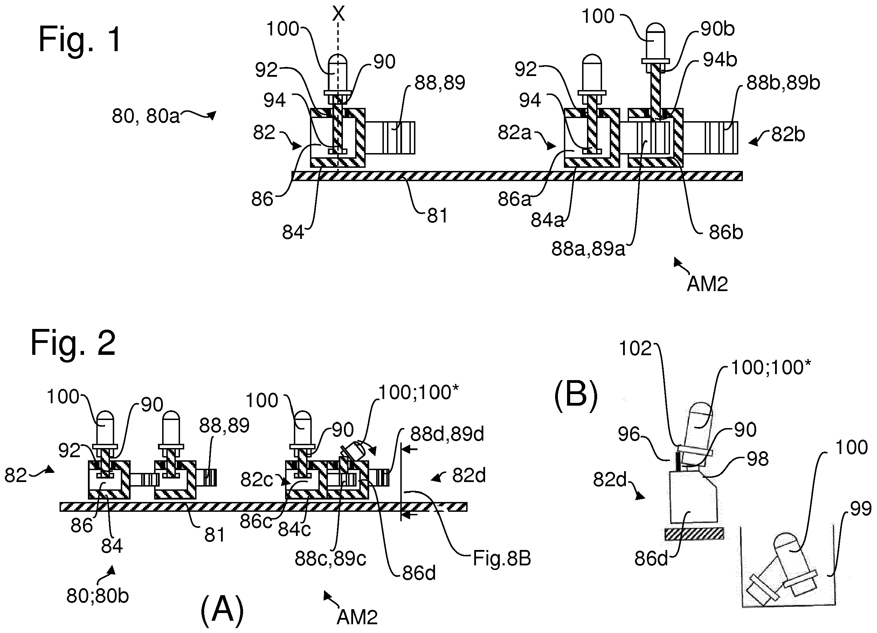

Figuren 1 bis 3 zeigen verschiedene Ausführungsformen eines Shuttle- Systems mit doppelter Antriebsfunktion gemäß vorliegender Erfindung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Figuren 1 bis 3 zeigen verschiedene Ausführungsformen eines Shuttle- Systems 80 mit doppelter Antriebsfunktion gemäß vorliegender Erfindung. Auf den Shuttle-Einheiten 82 werden Vorformlinge 100 oder Flaschen jeweils einzeln durch mehrere Behandlungsstationen der Behälterbehandlungsanlage transportiert. Als Antrieb 84 der Shuttle- Einheiten 82 wird beispielsweise je ein Linearmotor verwendet, der die Shuttle-Einheiten 82 mittels Magnetkräften entlang einer Schiene 81 zu den einzelnen Behandlungsstationen transportiert. Die Schiene 81 umfasst einen Stator mit einer Vielzahl von ansteuerbaren Spulen zur Erzeugung einer Magnetkraft. Der Antrieb 84 der einzelnen Shuttle- Einheiten 82 wird in diesem Fall doppelt genutzt, um Funktionen einzelner Shuttle- Einheiten 82 auszulösen. Die jeweiligen Funktionen werden dadurch ausgelöst, dass in einem zweiten laufenden Behälterbehandlungsbetrieb AM2 eine erste Shuttle- Einheit 82a, 82c, 82e in Kontakt mit einer zweiten Shuttle- Einheit 82b, 82d, 82f gebracht wird und dadurch eine Funktion der zweiten Shuttle- Einheit 82b, 82d, 82f auslöst. Die Annäherung der Shuttle- Einheiten 82a, 82b oder 82c, 82d oder 82e, 82f wird durch eine unterschiedliche Steuerung der Antriebe 84a - 84f der Shuttle- Einheiten 82a - 82f erreicht.

Die Shuttle- Einheiten 82a - 82f umfassen jeweils einen Aufnahmebereich 86a - 86f und ein in Transportrichtung TR vorauseilendes Aktivierungselement 88a - 88f. Bei Eingriff eines Aktivierungselementes 88a, 88c, 88e einer ersten Shuttle- Einheit 82a, 82c, 82e in den Aufnahmebereich 86b, 86d, 86f einer zweiten Shuttle- Einheit 82b, 82d, 82f, wird eine Funktion der zweiten Shuttle- Einheit 82b, 82d, 82f ausgelöst.

Gemäß der in Figur 1 dargestellten Ausführungsform eines Shuttle- Systems 80a umfassen die Shuttle- Einheiten 82a, 82b jeweils einen Aufnahmebereich 86a, 86b mit einem Aufnahmedorn 90 für Vorformlinge 100, der der Oberseite des Aufnahmebereiches 86 zugeordnet ist. In Verlängerung der Längsachse X des Aufnahmedorns 90 ist eine Außenverzahnung 94 vorgesehen. Zwischen Außenverzahnung 94 und Dorn 90 ist ein Bewegungsgewinde 92 in einem Innenraum des Aufnahmebereichs 86 auf der Achse X zu sehen. Das Aktivierungselement 88 ist als Zahnstange 89 ausgebildet. Insbesondere sind die Zähne der Zahnstange 89 korrespondierend zu der Außenverzahnung 94 ausgebildet.

Das Shuttle- System 80a wird beispielsweise in Heizöfen zur Erwärmung von Vorformlingen verwendet. Durch eine erhöhte Geschwindigkeit der nachlaufenden Shuttle- Einheit 82a wird das Aktivierungselement 88a der nachlaufenden Shuttle- Einheit 82a in den Aufnahmebereich 86b der vorauseilenden Shuttle- Einheit 82b geschoben. Die Zahnstange 89a der nachlaufenden Shuttle- Einheit 82a greift in das Außengewinde 94b im Innenraum des Aufnahmebereiches 86b der vorauseilenden Shuttle- Einheit 82b ein und bewegt somit den Aufnahmedorn 90b mit dem Vorformling 100 nach oben. Durch die gezielte Positionierung des Vorformlings 100 in unterschiedlichen Höhen können beispielsweise bestimmte Bereiche des Vorformlings 100 entlang seiner Längsachse gezielt mittels, insbesondere stationär an der Heizstrecke angebrachten, Heizelementen, wie beispielsweise Infrarotstrahlern, erwärmt werden. Durch eine unterschiedliche Steuerung der Antriebe 84 der Shuttle- Einheiten 82 wird die Relativgeschwindigkeit der Shuttle- Einheiten 82a, 82b zueinander eingestellt. Somit kann gezielt die Positionierungshöhe der Vorformlinge 100 reguliert werden. Weiterhin kann die Zeitdauer, wie lange sich der Vorformling 100 in einer bestimmten Positionierungshöhe befindet, ebenfalls reguliert werden. Beispielsweise wäre es auf diese Weise möglich, einen Bereich kurz unterhalb eines Tragrings des Vorformlings 100 erst kurz vor einem Ende einer Heizstrecke zu erwärmen, so dass vor einem Blasprozess möglichst wenig Wärme in den Tragring des Vorformlings 100 eingetragen wird.

Beispielsweise weisen die Shuttle- Einheiten 82a, 82b anfangs einen definierten Abstand zueinander auf und werden beide mit gleicher, konstanter Geschwindigkeit betrieben. Durch Erhöhung der Geschwindigkeit der nachlaufenden Shuttle- Einheit 82a verringert sich der Abstand zwischen den beiden Shuttle- Einheiten 82a, 82b, bis das Aktivierungselement 88a der nachlaufenden Shuttle- Einheit 82a in den Aufnahmebereich 86b der vorauseilenden Shuttle- Einheit 82b eingreift. Durch rechtzeitiges Verringern der Geschwindigkeit der nachlaufenden, aufholenden Shuttle- Einheit 82a kann die gewünschte Positionierungshöhe des mit der vorauseilenden Shuttle- Einheit 82b beförderten Vorformlings 100 genau eingestellt werden. Über ein in den Figuren nicht dargestelltes Pyrometer kann die Temperatur der Vorformlinge 100 an bestimmten Positionen entlang der Heizstrecke gemessen werden. Die Messwerte können einer Regelungseinheit zugeführt werden, welche beim Vergleich mit Soll- Werten den Antrieb der Shuttle- Einheiten und deren Position zueinander entsprechend der gemessenen Temperatur einstellt. Wird beispielsweise festgestellt, dass die Temperatur eines Vorformlings 100 zu hoch ist, kann dieser bereits vor dem Ende der Heizstrecke über den Antrieb einer anderen Shuttle- Einheit aus der Heizzone heraus entnommen werden, indem er beispielsweise abgesenkt wird. Bevorzugt wird dabei nur die Geschwindigkeit der einen Shuttle- Einheit, auf der der Vorformling positioniert ist, dessen Temperatur nicht erhöht werden soll, erhöht oder gesenkt, um nicht die Erwärmung der Vorformlinge der anderen Shuttle- Einheiten zu beeinflussen. Da eine Wechselwirkung bei sehr nahen Abständen zu anderen Shuttle- Einheiten nicht ausgeschlossen werden kann, können durch eine solche Korrektur auch andere Vorformlinge in Mitleidenschaft gezogen werden. Es ist jedoch denkbar, dass die Regelung derart gestaltet ist, dass sie bei Kenntnis der Toleranzgrenzen noch das bestmögliche Heizergebnis für alle zusammenwirkenden Shuttle- Einheiten inkl. Vorformlinge erkennt und umsetzt.

Figuren 2 zeigen das Auswerfen eines Vorformlings 100 in einem Shuttle- System 80b. Die Shuttle- Einheiten 82c, 82d umfassen jeweils einen Aufnahmebereich 86c, 86d mit einem Aufnahmedorn 90 für die Vorformlinge 100, der der Oberseite des Aufnahmebereiches 86c, 86d zugeordnet ist. In Verlängerung der Längsachse X des Aufnahmedorns 90 ist eine Außenverzahnung 94 vorgesehen, die an ein Bewegungsgewinde 92 angrenzt, welches sich in einen Innenraum des Aufnahmebereichs 86b, 86d erstreckt. Das Aktivierungselement 88b, 88d ist als Zahnstange 89 ausgebildet. Insbesondere sind die Zähne der Zahnstange 89 korrespondierend zu der Außenverzahnung 94 ausgebildet.

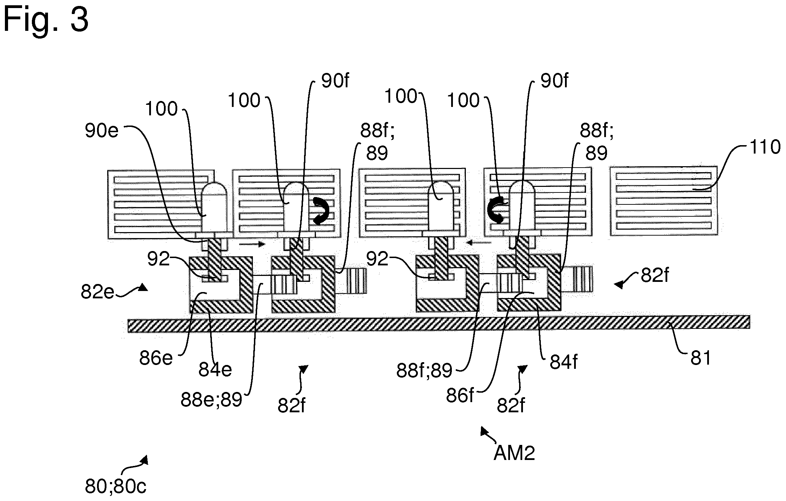

Die Aktivierung der Auswurffunktion der vorauseilenden Shuttle- Einheiten 82d erfolgt entsprechend der in Figur 1 beschriebenen Aktivierung der Vertikalbewegung des Aufnahmedorns 90. Die Shuttle- Einheiten 82c, 82d weisen eine Schrägfläche 98 zum Abwurf der Vorformlinge 100 auf (Figur 3B). In diesem Fall wird durch die Aktivierung der vorauseilenden Shuttle- Einheit 82d mittels des Aktivierungselementes 88c der nachfolgenden Shuttle- Einheit 82d der Vorformling 100* mit seinem Aufnahmedorn 90 so weit abgesenkt, bis ein Tragring 102 des Vorformlings 100* ein Abstreifelement 96 kontaktiert, das den Vorformling 100* vom Aufnahmedorn 90 ablöst, so dass der Vorformling 100* über die Schrägfläche 98 der Shuttle- Einheit 82d in eine Sammelvorrichtung 99 o.ä. abgeworfen wird. Auf diese Weise kann jeder Vorformling 100oder ein anderer über ein Shuttle- System 80 transportierter Artikel an einer beliebigen Stelle innerhalb einer Abfüllanlage o.ä. ausgeworfen werden. Vorzugsweise findet ein solches Auswerfen nach einer Inspektion statt, bei der fehlerhafte Vorformlinge 100* erkannt werden.

Beispielsweise können über Shuttle- Systeme mit entsprechenden Haltevorrichtungen anstelle der Aufnahmedorne auch Flaschen transportiert werden. Die Inspektionseinheit erkennt dann fehlerhaft geblasene Flaschen, fehlerhaft befüllte Flaschen, fehlerhaft etikettierte Flaschen o.ä., die aussortiert werden müssen. Hinter den Inspektionsvorrichtungen stehen Sammelvorrichtungen, insbesondere Schütten o.ä., in denen die fehlerhaften Flaschen gesammelt werden. Das Verfahren kann auch im normalen Heizbetrieb verwendet werden, wenn ein gleichmäßiges Wärmeprofil entlang des Umfangs des Vorformlings 100 erzeugt werden soll.

Figur 3 zeigt die Verwendung eines magnetischen Shuttle- Systems 80c beim preferential heating von Vorformlingen 100, bei dem bestimmte Seiten der Vorformlinge 100 jeweils den Heizelementen 110 zugewandt und für eine definierte Zeit gezielt beheizt werden.

Die Shuttle- Einheiten 82e, 82f weisen unterhalb des Aufnahmedorns 90 kein Bewegungsgewinde auf. Stattdessen bewirkt die nachlaufende Shuttle- Einheit 82e beim Eingriff seines Aktivierungselementes 88e in den Aufnahmebereich 86f der vorauseilenden Shuttle- Einheit 82f eine Drehung des Aufnahmedorns 90f, so dass der Vorformling 100 zwar auf gleicher Höhe bleibt, aber hin- und hergedreht werden kann. Dadurch können gezielt bestimmte Umfangsbereiche des Vorformlings 100 länger oder kürzer den seitlich zur Transportstrecke bzw. Transportschiene 81 angeordneten Heizelementen 110 zugewandt bleiben, wodurch der Vorformling 100 in diesem Umfangsbereich stärker oder weniger stark erwärmt wird. Die Drehung des Vorformlings 100 wird dadurch erzielt, dass der Abstand der Shuttle- Einheiten 82e, 82f zueinander immer wieder verändert wird. Mit diesem System kann auf einen Extra- Antrieb pro Shuttle- Einheit 82e, 82f zum Drehen der Vorformlinge 100 im Heizofen verzichtet werden. Das Temperaturprofil kann auch - analog zur obigen Beschreibung - über eine Regeleinheit und einen Temperatursensor reguliert werden.

### Bezuaszeichenliste

- 80: Shuttle- System
- 81: Schiene
- 82: Shuttle- Einheit
- 84: Antrieb
- 86: Aufnahmebereich
- 88: Aktivierungselement
- 89: Zahnstange
- 90: Aufnahmedorn
- 92: Bewegungsgewinde
- 94: Außenverzahnung
- 96: Abstreiferelement
- 98: Schrägfläche
- 99: Sammelvorrichtung
- 100: Vorformling
- 102: Tragring
- 110: Heizelement
- TR: Transportrichtung

## Patentansprüche

1. Verfahren zum Betreiben einer Behälterbehandlungsanlage mit mindestens einer Behälterbehandlungsvorrichtung (1), wobei die Behälterbehandlungsvorrichtung (1) mindestens ein erstes Funktionselement (6) mit einem ersten Antrieb für mindestens eine erste Arbeitsfunktion des ersten Funktionselementes (6) im laufenden Behälterbehandlungsbetrieb aufweist und wobei die Behälterbehandlungsanlage mindestens ein zweites Funktionselement (11) umfasst, wobei das erste Funktionselement (6) mindestens ein erstes Betätigungselement (7) umfasst und dass das erste Funktionselement (6) in einem ersten laufenden Behälterbehandlungsbetrieb (AM) so eingestellt ist, dass das erste Betätigungselement (7) keine Funktion auf das zweite Funktionselement (11) ausübt und wobei das mindestens eine erste Funktionselement (6) für einen zweiten laufenden Behälterbehandlungsbetrieb oder für einen dritten Wechselbetrieb (WM) durch den ersten Antrieb so verfahren und / oder neu positioniert oder eingestellt wird, dass das erste Betätigungselement (7) durch Kontakt mit dem mindestens einen zweiten Funktionselement (11) der Behälterbehandlungsanlage eine Funktionalität des zweiten Funktionselements (11) auslöst oder aktiviert, wobei die Behälterbehandlungsvorrichtung (1) ein Transportsystem (80) ist, umfassend ein Schienensystem und eine Mehrzahl von magnetisch am Schienensystem beweglich angeordneten Shuttle- Einheiten (82) zum Transport von Vorformlingen (100) oder Flaschen, wobei der Antrieb der Shuttle-Einheiten (82) durch einen Linearmotor erfolgt, der die Shuttle-Einheiten (82) mittels Magnetkräften entlang des Schienensystems bewegt, wobei das Schienensystem einen Stator und eine Mehrzahl von ansteuerbaren Spulen zur Erzeugung der Magnetkraft umfasst, **dadurch gekennzeichnet, dass**
der Antrieb (84) der einzelnen Shuttle Einheiten (82) doppelt genutzt wird, um Funktionen einzelner Shuttle- Einheiten (82) auszulösen, wobei in einem zweiten laufenden Behälterbehandlungsbetrieb (AM2) eine erste Shuttle- Einheit in Kontakt mit einer zweiten Shuttle- Einheit gebracht wird und dadurch eine Funktion der zweiten Shuttle- Einheit ausgelöst wird, wobei die Annäherung der Shuttle-Einheiten (82) über eine unterschiedliche Steuerung der Antriebe erfolgt.

2. Verfahren nach Anspruch 1, wobei die Verstellung des Antriebs des mindestens einen ersten Funktionselements von dem ersten laufenden Behälterbehandlungsbetrieb zum zweiten laufenden Behälterbehandlungsbetrieb oder zum dritten Wechselbetrieb durch eine Steuerungseinheit (13) angesteuert und kontrolliert wird.

3. Verfahren nach einem der voranstehenden Ansprüche, wobei eine Mehrzahl identischer Shuttle Einheiten (82) in Reihe nacheinander angeordnet werden und wobei jeweils der Antrieb (84) mindestens eines der Funktionselemente (82) gezielt angesteuert und somit die Funktionalität mindesten eines benachbarten Funktionselementes (82) gezielt aktiviert wird.

4. Verfahren nach einem der voranstehenden Ansprüche, wobei jede Shuttle Einheit (82) ein Greif- oder Halteelement aufweist und wobei jede Shuttle Einheit (82) einen Lösemechanismus für das Greif- oder Halteelement aufweist.

5. Verfahren nach Anspruch 4, wobei der Lösemechanismus durch ein Betätigungselement einer vorauseilenden oder einer nachlaufenden Shuttle Einheit (82) ausgelöst werden kann, wodurch das Greif- oder Halteelement von der jeweiligen Shuttle Einheit (82) gelöst wird oder wodurch ein am Greif- oder Halteelement angeordneter Artikel abgelöst wird.

6. Verfahren nach Anspruch 3, wobei jede Shuttle Einheit (82) einen Hebel zum Heben und Senken eines des Greif- oder Halteelements der Shuttle Einheit (82) und/oder zum Heben und Senken eines durch die Shuttle Einheit (82) transportierten Artikels umfasst.

7. Verfahren nach Anspruch 6, wobei das Betätigungselement einer vorauseilenden oder einer nachlaufenden Shuttle Einheit (82) den Hebel einer nachlaufenden oder einer vorauseilenden Shuttle Einheit (82) betätigt, wodurch der Artikel angehoben wird oder wodurch eine vertikale Bewegung des Greif- oder Halteelements der nachlaufenden oder einer vorauseilenden Shuttle Einheit (82) bewirkt wird.

8. Verfahren nach Anspruch 3, wobei das Betätigungselement einer vorauseilenden oder einer nachlaufenden Shuttle Einheit (82) einen Hebel einer nachlaufenden oder einer vorauseilenden Shuttle Einheit (82) betätigt, wodurch eine Rotationsbewegung des Greif- oder Halteelements der nachlaufenden oder einer vorauseilenden Shuttle Einheit (82) bewirkt wird.

9. Verfahren nach Anspruch 3, wobei jede Shuttle Einheit (82) einen Hebel zum Steuern eines Greif- oder Halteelements der Shuttle Einheit (82) für die transportierten Artikel enthält, wobei eine Inspektionseinrichtung einen Defekt an transportierten Artikeln erkennt und ein Ablösen des als defekt erkannten Artikels von der jeweiligen Shuttle Einheit (82) auslöst.

10. Verfahren nach einem der voranstehenden Ansprüche, wobei jede Shuttle Einheit (82) eine erste Arbeitsposition einnehmen kann, in der die Shuttle Einheit (82) als erstes Funktionselement dient und wobei jede Shuttle Einheit (82) eine zweite Arbeitsposition einnehmen kann, in der es als zweites Funktionselement dient.

11. Behälterbehandlungsanlage mit mindestens einer Behälterbehandlungsvorrichtung (1), wobei die Behälterbehandlungsvorrichtung (1) mindestens ein erstes Funktionselement (6) mit einem ersten ansteuerbaren Antrieb zum Antreiben mindestens einer ersten Arbeitsfunktion des ersten Funktionselementes (6) im laufenden Behälterbehandlungsbetrieb (AM) umfasst und wobei die Behälterbehandlungsanlage mindestens ein zweites Funktionselement (11) umfasst, wobei das erste Funktionselement (6) mindestens ein erstes Betätigungselement (7) umfasst und dass der Antrieb des ersten Funktionselements (6) in einem ersten laufenden Behälterbehandlungsbetrieb (AM) so eingestellt ist, dass das erste Betätigungselement (6) keinen Kontakt mit einer Kontaktstelle des zweiten Funktionselement (11) aufweist und wobei das mindestens eine erste Funktionselement (6) für einen zweiten laufenden Behälterbehandlungsbetrieb oder für einen dritten Wechselbetrieb (WM) durch den ersten Antrieb neu positionierbar ist, dass das erste Betätigungselement (7) des ersten Funktionselements (11) der Behälterbehandlungsanlage die Kontaktstelle des zweiten Funktionselements (11) kontaktiert, wodurch eine Funktionalität des zweiten Funktionselements (11) aktivierbar ist, wobei die Behälterbehandlungsvorrichtung (1) ein Transportsystem (80) ist, umfassend ein Schienensystem und eine Mehrzahl von magnetisch am Schienensystem beweglich angeordneten Shuttle- Einheiten (82) zum Transport von Vorformlingen (100) oder Flaschen, wobei der Antrieb der Shuttle-Einheiten (82) durch einen Linearmotor erfolgt, der die Shuttle-Einheiten (82) mittels Magnetkräften entlang des Schienensystems bewegt, wobei das Schienensystem einen Stator und eine Mehrzahl von ansteuerbaren Spulen zur Erzeugung der Magnetkraft umfasst, **dadurch gekennzeichnet, dass**
der Antrieb (84) der einzelnen Shuttle Einheiten (82) doppelt nutzbar ist, um Funktionen einzelner Shuttle- Einheiten (82) auszulösen, wobei in einem zweiten laufenden Behälterbehandlungsbetrieb (AM2) eine erste Shuttle- Einheit in Kontakt mit einer zweiten Shuttle- Einheit bringbar ist und dadurch eine Funktion der zweiten Shuttle- Einheit auslösbar ist, wobei die Annäherung der Shuttle- Einheiten (82) über eine unterschiedliche Steuerung der Antriebe einstellbar ist.

12. Behälterbehandlungsanlage nach Anspruch 11, wobei die Behälterbehandlungsanlage eine Steuerungseinheit (13) zur Steuerung der Positionierung des mindestens einen ersten Funktionselements mittels des mindestens einen ersten Antriebs umfasst.

13. Behälterbehandlungsanlage nach einem der Ansprüche 11 oder 12, wobei die Behälterbehandlungsvorrichtung ein Transportsystem (80) mit einer Mehrzahl von Shuttle Einheiten (82) ist, wobei jede der Shuttle Einheiten (82) einen eigenen Antrieb (84), einen Aufnahmebereich (86) für ein Aktivierungselement (88) und ein Aktivierungselement (88) umfasst und wobei jede Shuttle Einheit (82) als erstes Funktionselement und / oder als zweites Funktionselement einsetzbar ist.

## Claims

1. A method for operating a container treatment installation with at least one container treatment device (1), wherein the container treatment device (1) has at least one first functional element (6) with a first drive for at least one first work function of the first functional element (6) during active container treatment mode and wherein the container treatment installation comprises at least one second functional element (11), wherein the first functional element (6) comprises at least one first actuation element (7), and the first functional element (6), in a first active container treatment mode (AM), is set such that the first actuation element (7) performs no function on the second functional element (11), and wherein, for a second active container treatment mode or for a third change operating mode (WM), the at least one first functional element (6) is moved and/or re-positioned or adjusted by the first drive such that the first actuation element (7) triggers or activates a function of the second functional element (11) through contact with the at least one second functional element (11) of the container treatment installation, wherein the container treatment device (1) is a transport system (80) comprising a rail system and a plurality of shuttle units (82) which are magnetically movably arranged on the rail system for the transport of preforms (100) or bottles, wherein the shuttle units (82) are being driven by a linear motor, which linear motor moves the shuttle units (82) along the rail system using magnetic forces, wherein the rail system comprises a stator and a multitude of controllable coils for generating the magnetic force, **characterized in that** the drive (84) of the individual shuttle units (82) is used in two ways to trigger functions of individual shuttle units (82), wherein in a second active container treatment mode (AM2) a first shuttle unit is being brought into contact with a second shuttle unit and thereby a function of the second shuttle unit is being triggered, wherein the approximation of the shuttle units (82) is being effected via a different control of the drives.

2. The method as recited in claim 1, wherein the adjustment of the drive of the at least one first functional element from the first active container treatment mode to the second active container treatment mode or to the third change operating mode is controlled and monitored by a control unit (13).

3. The method as recited in one of the previous claims, wherein a plurality of identical shuttle units (82) is arranged in series one after the other, and wherein the drive (84) of at least one of the functional elements (82) is controlled in a targeted manner and thus the functionality of at least one adjacent functional element (82) is activated in a targeted manner.

4. The method as recited in one of the previous claims, wherein each shuttle unit (82) has a gripping or holding element and wherein each shuttle unit (82) has a detachment mechanism for the gripping or holding element.

5. The method as recited in claim 4, wherein the detachment mechanism can be activated by an actuation element of a preceding or trailing shuttle unit (82), thereby releasing the gripping or holding element of the respective shuttle unit (82) or thereby releasing an article that is attached to the gripping or holding element.

6. The method as recited in claim 3, wherein each shuttle unit (82) has a lever for lifting and lowering of the gripping or holding element of the shuttle unit (82) and/or for lifting and lowering of an article that is being transported by the shuttle unit (82).

7. The method as recited in claim 6, wherein the actuation element of a preceding or trailing shuttle unit (82) activates the lever of a trailing or preceding shuttle unit (82), whereby the article is being lifted or whereby a vertical movement of the gripping or holding element of the trailing or preceding shuttle unit (82) is effected.

8. The method as recited in claim 3, wherein the actuation element of a preceding or trailing shuttle unit (82) activates a lever of a trailing or preceding shuttle unit (82), whereby a rotational movement of the gripping or holding element of the trailing or preceding shuttle unit (82) is effected.

9. The method as recited in claim 3, wherein each shuttle unit (82) has a lever for controlling the gripping or holding element of the shuttle unit (82) for the articles being transported, wherein an inspection apparatus detects a defect of an article being transported and activates a detachment of the article detected as defective from the respective shuttle unit (82) .

10. The method as recited in one of the previous claims, wherein each shuttle unit (82) can take up a first working position, in which first working position the shuttle unit (82) functions as a first functional element and wherein each shuttle unit (82) can take up a second working position, in which second working position the shuttle unit (82) functions as a second functional element

11. A container treatment installation with at least one container treatment device (1), wherein the container treatment device (1) comprises at least one first functional element (6) with a first controllable drive for driving at least one first work function of the first functional element (6) during active container treatment mode (AM) and wherein the container treatment installation comprises at least one second functional element (11), wherein the first functional element (6) comprises at least one first actuation element (7), and wherein the drive of the first functional element (6), in a first active container treatment mode (AM), is set such that the first actuation element (7) has no contact with a contact point of the second functional element (11), and wherein, for a second active container treatment mode or for a third change operating mode (WM), the at least one first functional element (6) is repositionable by the first drive such that the first actuation element (7) of the first functional element (6) of the container treatment installation contacts the contact point of the second functional element (11), whereby a function of the second functional element (11) is activatable, wherein the container treatment device (1) is a transport system (80) comprising a rail system and a plurality of shuttle units (82) which are magnetically movably arranged on the rail system for the transport of preforms (100) or bottles, wherein the shuttle units (82) are being driven by a linear motor, which linear motor moves the shuttle units (82) along the rail system using magnetic forces, wherein the rail system comprises a stator and a multitude of controllable coils for generating the magnetic force, **characterized in that** the drive (84) of the individual shuttle units (82) is used in two ways to trigger functions of individual shuttle units (82), wherein in a second active container treatment mode (AM2) a first shuttle unit is being brought into contact with a second shuttle unit and thereby a function of the second shuttle unit is being triggered, wherein the approximation of the shuttle units (82) is being effected via a different control of the drives.

12. The container treatment installation as recited in claim 11, wherein the container treatment installation comprises a control unit (13) for controlling the positioning of the at least one first functional element (6) by means of the at least one first drive.

13. The container treatment installation as recited in one of the claim 11 or 12, wherein the container treatment device (1) device is a transport system (80) with a plurality of shuttle units (82), wherein each shuttle unit (82) comprises an own drive (84), a receiving section (86) for an activating element (88) and an activating element (88), and wherein each transport unit (82) is employable as first functional element and/or as second functional element.

## Revendications

1. Procédé destiné à faire fonctionner une installation de traitement de récipients comprenant au moins un dispositif de traitement de récipients (1), dans lequel ledit dispositif de traitement de récipients (1) comprend au moins un premier élément fonctionnel (6) ayant un premier mécanisme d'entraînement pour au moins une première fonction de travail du premier élément fonctionnel (6) pendant le fonctionnement de traitement de récipients en cours et dans lequel l'installation de traitement de récipients comprend au moins un deuxième élément fonctionnel (11), dans lequel le premier élément fonctionnel (6) comprend au moins un premier élément d'actionnement (7) et le premier élément fonctionnel (6) est réglé dans un premier fonctionnement de traitement de récipients (AM) en cours de telle manière que ledit premier élément d'actionnement (7) n'exerce aucune fonction sur le deuxième élément fonctionnel (11), et dans lequel, pour un deuxième fonctionnement de traitement de récipients en cours ou pour un troisième fonctionnement de changement (WM), ledit au moins un premier élément fonctionnel (6) est déplacé et/ou repositionné ou réglé par le premier mécanisme d'entraînement de telle sorte que le premier élément d'actionnement (7) déclenche ou active, par contact avec ledit au moins un deuxième élément fonctionnel (11) de l'installation de traitement de récipients, une fonctionnalité du deuxième élément fonctionnel (11), dans lequel le dispositif de traitement de récipients (1) est un système de transport (80) comprenant un système de rails et une pluralité d'unités navette (82) disposées de manière magnétique et mobile sur le système de rails et destinées à transporter des préformes (100) ou bouteilles, dans lequel l'entraînement des unités navette (82) se fait par le biais d'un moteur linéaire qui déplace les unités navette (82) le long du système de rails au moyen de forces magnétiques, dans lequel le système de rails comprend un stator et une pluralité de bobines commandables pour générer la force magnétique, **caractérisé par le fait que** le mécanisme d'entraînement (84) des unités navette (82) individuelles est utilisé doublement pour déclencher des fonctions d'unités navette (82) individuelles, dans lequel, dans un deuxième fonctionnement de traitement de récipients (AM2) en cours, une première unité navette est mise en contact avec une deuxième unité navette et ainsi une fonction de la deuxième unité navette est déclenchée, dans lequel le rapprochement des unités navette (82) se fait par une commande différente des mécanismes d'entraînement.

2. Procédé selon la revendication 1, dans lequel le réglage du mécanisme d'entraînement dudit au moins un premier élément fonctionnel du premier fonctionnement de traitement de récipients en cours au deuxième fonctionnement de traitement de récipients en cours ou au troisième fonctionnement de changement est commandé et contrôlé par une unité de commande (13).

3. Procédé selon l'une quelconque des revendications précédentes, dans lequel une pluralité d'unités navette (82) identiques est disposée en série les unes après les autres et dans lequel respectivement le mécanisme d'entraînement (84) d'au moins un des éléments fonctionnels (82) est commandé de manière visée et, ainsi, la fonctionnalité d'au moins un élément fonctionnel (82) voisin est activée de manière visée.

4. Procédé selon l'une quelconque des revendications précédentes, dans lequel chaque unité navette (82) présente un élément de préhension ou de maintien et dans lequel chaque unité navette (82) comprend un mécanisme de libération pour l'élément de préhension ou de maintien.

5. Procédé selon la revendication 4, dans lequel le mécanisme de libération peut être déclenché par un élément d'actionnement d'une unité navette (82) située en amont ou d'une unité navette (82) située en aval, ce par quoi ledit élément de préhension ou de maintien est détaché de l'unité navette (82) respective ou ce par quoi un article disposé sur l'élément de préhension ou de maintien est détaché.

6. Procédé selon la revendication 3, dans lequel chaque unité navette (82) comprend un levier pour soulever et abaisser l'élément de préhension ou de maintien de l'unité navette (82) et/ou pour soulever et abaisser un article transporté par l'unité navette (82).

7. Procédé selon la revendication 6, dans lequel l'élément d'actionnement d'une unité navette (82) située en amont ou d'une unité navette (82) située en aval actionne le levier d'une unité navette (82) située en aval ou d'une unité navette (82) située en amont, ce par quoi l'article est soulevé ou ce par quoi un mouvement vertical de l'élément de préhension ou de maintien de l'unité navette (82) située en aval ou d'une unité navette (82) située en amont est provoquée.

8. Procédé selon la revendication 3, dans lequel l'élément d'actionnement d'une unité navette (82) située en amont ou d'une unité navette (82) située en aval actionne un levier d'une unité navette (82) située en aval ou d'une unité navette (82) située en amont, ce par quoi un mouvement de rotation de l'élément de préhension ou de maintien de l'unité navette (82) située en aval ou d'une unité navette (82) située en amont est provoquée.

9. Procédé selon la revendication 3, dans lequel chaque unité navette (82) comprend un levier destiné à commander un élément de préhension ou de maintien de l'unité navette (82) pour les articles transportés, dans lequel un dispositif d'inspection détecte un défaut sur des articles transportés et déclenche un détachement de l'article détecté comme étant défectueux, de l'unité navette (82) respective.

10. Procédé selon l'une quelconque des revendications précédentes, dans lequel chaque unité navette (82) peut prendre une première position de travail dans laquelle l'unité navette (82) fait fonction de premier élément fonctionnel, et dans lequel chaque unité navette (82) peut prendre une deuxième position de travail dans laquelle elle fait fonction de deuxième élément fonctionnel.

11. Installation de traitement de récipients comprenant au moins un dispositif de traitement de récipients (1), dans laquelle ledit dispositif de traitement de récipients (1) comprend au moins un premier élément fonctionnel (6) ayant un premier mécanisme d'entraînement commandable pour entraîner au moins une première fonction de travail du premier élément fonctionnel (6) pendant le fonctionnement de traitement de récipients (AM) en cours, et dans laquelle l'installation de traitement de récipients comprend au moins un deuxième élément fonctionnel (11), dans laquelle le premier élément fonctionnel (6) comprend au moins un premier élément d'actionnement (7) et le mécanisme d'entraînement du premier élément fonctionnel (6) est réglé dans un premier fonctionnement de traitement de récipients (AM) en cours de telle manière que ledit premier élément d'actionnement (7) ne présente pas de contact avec un point de contact du deuxième élément fonctionnel (11), et dans laquelle, pour un deuxième fonctionnement de traitement de récipients en cours ou pour un troisième fonctionnement de changement (WM), ledit au moins un premier élément fonctionnel (6) peut être repositionné par le premier mécanisme d'entraînement de telle sorte que le premier élément d'actionnement (7) du premier élément fonctionnel (6) de l'installation de traitement de récipients entre en contact avec le point de contact du deuxième élément fonctionnel (11), une fonctionnalité du deuxième élément fonctionnel (11) pouvant ainsi être activée, dans laquelle le dispositif de traitement de récipients (1) est un système de transport (80) comprenant un système de rails et une pluralité d'unités navette (82) disposées de manière magnétique et mobile sur le système de rails et destinées à transporter des préformes (100) ou bouteilles, dans laquelle l'entraînement des unités navette (82) se fait par le biais d'un moteur linéaire qui déplace les unités navette (82) le long du système de rails au moyen de forces magnétiques, dans laquelle le système de rails comprend un stator et une pluralité de bobines commandables pour générer la force magnétique, **caractérisée par le fait que** le mécanisme d'entraînement (84) des unités navette (82) individuelles peut être utilisé doublement pour déclencher des fonctions d'unités navette (82) individuelles, dans laquelle, dans un deuxième fonctionnement de traitement de récipients (AM2) en cours, une première unité navette peut être mise en contact avec une deuxième unité navette et ainsi une fonction de la deuxième unité navette peut être déclenchée, dans laquelle le rapprochement des unités navette (82) peut être réglé par une commande différente des mécanismes d'entraînement.

12. Installation de traitement de récipients selon la revendication 11, dans lequel l'installation de traitement de récipients comprend une unité de commande (13) pour commander le positionnement dudit au moins un premier élément fonctionnel au moyen dudit au moins un premier mécanisme d'entraînement.

13. Installation de traitement de récipients selon l'une quelconque des revendications 11 ou 12, dans laquelle le dispositif de traitement de récipients est un système de transport (80) comprenant une pluralité d'unités navette (82), dans laquelle chacune des unités navette (82) comprend un propre mécanisme d'entraînement (84), une zone de réception (86) pour un élément d'activation (88) et un élément d'activation (88), et dans laquelle chaque unité navette (82) peut être utilisée en tant que premier élément fonctionnel et/ou en tant que deuxième élément fonctionnel.
